# EUROPÄISCHE PATENTSCHRIFT

(11) **EP 2 513 211 B1**
(45) Veröffentlichungstag und Bekanntmachung des Hinweises auf die Patenterteilung: **02.04.2014**
(21) Anmeldenummer: 10801130.5
(22) Anmeldetag: 16.12.2010
(51) Int. Cl.: C09D 119/00, C08L 19/00, C08J 11/04, C09D 117/00, C09D 121/00

(54) **FORM-, FARB- UND/ODER DICHTUNGSMASSE, VERFAHREN ZUR HERSTELLUNG EINER FORM-, FARB- UND/ODER DICHTUNGSMASSE UND NUTZSCHICHTEN AUS DIESEN MASSEN**
MOLDING, COLORING AND/OR SEALING COMPOUND, METHOD FOR PRODUCING A MOLDING, COLORING AND/OR SEALING COMPOUND AND USEFUL LAYERS CONSISTING OF SAID COMPOUNDS
MATIÈRE D'ÉTANCHÉITÉ, MATIÈRE À MOULER ET/OU MATIÈRE À COLORER, PROCÉDÉ DE PRODUCTION D'UNE MATIÈRE D'ÉTANCHÉITÉ, D'UNE MATIÈRE À MOULER ET/OU D'UNE MATIÈRE À COLORER, ET COUCHES D'USURE CONSTITUÉES DE CES MATIÈRES

(30) Priorität: 17.12.2009 DE 102009058938
(43) Veröffentlichungstag der Anmeldung: 24.10.2012
(73) Patentinhaber: Topf, Birgit, 04435 Schkeuditz (DE); Bochmann, Sebastian, 08321 Zschorlau (DE); Meyer, Susanna, 08321 Zschorlau (DE)
(72) Erfinder: BOCHMANN, Gerd, 08321 Zschorlau (DE)
(74) Vertreter: Hecht, Jan-David
(86) Internationale Anmeldenummer: PCT/EP2010/007658
(87) Internationale Veröffentlichungsnummer: WO 2011/082785

(56) Entgegenhaltungen:
- CN-A- 1 333 116
- US-A- 4 863 106
- US-A- 4 871 809
- US-A- 5 234 988
- US-A- 5 371 136
- US-A- 5 397 825

## Beschreibung

Die vorliegende Erfindung betrifft eine Form-, Farb- und/oder Dichtungsmasse nach dem Oberbegriff von Anspruch 1, ein Verfahren zur Herstellung einer Form-, Farb- und/oder Dichtungsmasse nach dem Oberbegriff von Anspruch 7 und Nutzschichten aus diesen Massen.

Aus der DE 44 16 570 A1 sind elastische Form-, Farb- und/oder Dichtungsmassen bekannt, die vorteilhaft kalt spritzbar ist, mit umweltfreundlichen Bindemitteln hergestellt werden kann und bevorzugt elastische Füllstoffe, insbesondere recycliertes Gummimaterial oder/und recyclierte Hartkunststoffe aufweisen. Diese Massen lassen sich vielfältig als Nutzschichten einsetzen, wobei die Nutzschichten wesentlich elastischer sind, als solche auf Bitumenbasis. Nachteilig an diesen bekannten Massen ist es jedoch, dass die Dichtwirkung der damit hergestellten Nutzschichten Schutzflächen, Verbundkörpern oder dgl., also die Wasserundurchdringlichkeit noch nicht optimal ist. Wasserundurchlässigkeit meint dabei nicht nur Undurchlässigkeit gegenüber flüssigem Wasser, sondern auch gegenüber Wasserdampf.

Weitere Dokumente zum Stand der Technik sind US 5 371 136 A, US 5 397 825 A, US 5 234 988 A, US 4 871 809 A, US 4 863 106 A und CN 1 333 116 A.

Es ist daher Aufgabe der vorliegenden Erfindung, eine Form-, Farb- und/oder Dichtungsmasse bereitzustellen, die die Herstellung von Nutzschichten erlaubt, die eine höhere Wasserundurchlässigkeit aufweisen, wobei die Masse dennoch im kalten Zustand spritzbar ist. Dabei soll die Masse ein Kunststoffmaterial als Füllstoff aufweisen, so dass insbesondere auch ein Beitrag zur Umweltbilanz durch Verwendung recyclierter Kunststoffe geleistet werden kann. Als Nutzschichten werden dabei neben Schichten auch Schutzflächen, Verbundkörpern oder dgl. verstanden. Diese Aufgabe wird gelöst mit einer Form-, Farb- und/oder Dichtungsmasse nach Anspruch 1, einem Verfahren zur Herstellung einer Form-, Farb- und/oder Dichtungsmasse nach Anspruch 7 und Nutzschichten aus diesen Massen nach Anspruch 10. Vorteilhafte Weiterbildungen sind in den abhängigen Ansprüchen angegeben.

Die Erfinder haben erkannt, dass der Hauptgrund für die noch nicht ausreichende Wasserundurchlässigkeit darin liegt, dass die bisher gebräuchliche Masse der DE 44 16 570 A1 Lufteinschlüsse aufweist. Dies hängt damit zusammen, dass das Kunststoffmaterial, das bisher als Füllstoff verwendet wurde, eine relativ zerklüftete, unregelmäßige und unebene Oberfläche aufweist. Der Grund dafür ist, dass als Kunststoffmaterial Kunststoffmehle verwendet wurde, die durch Warmvermahlen gewonnen wurden, also einem Mahlen bei Temperaturen zwischen Raumtemperatur und etwa 30 bis 40 °C. Bei diesem Mahlen findet allerdings eher ein Reißen des Materials statt, was mit der beschriebenen Oberflächenausbildung einhergeht.

Dadurch werden Lufteinschlüsse in der Masse provoziert, was die Wasserdurchlässigkeit insbesondere bei dünnen Anstrichen erhöht. Außerdem vermindern solche Oberflächenbeschaffenheiten die Fließfähigkeit durch eine die Viskosität erhöhende innere Reibung in der Masse, so dass solche Anstriche eher reißen, weshalb dünne Anstriche nicht möglich sind. Weiterhin führen solche Lufteinschlüsse dazu, dass Schwundrisse entstehen können, die Trocknung nicht homogen erfolgt und das Bindemittel vorab korrumpiert wird, d. h. dass das Bindemittel vorab mit Luft reagiert, so dass sich verschlechterte Eigenschaften der Masse einstellen. Insgesamt führen solche Lufteinschlüsse also zu einer erhöhten Wasserdurchlässigkeit und verschlechterten Verarbeitungseigenschaften der Masse.

Diese Nachteile werden erfindungsgemäß dadurch beseitigt, dass als Kunststoffmaterialien nur kaltvermahlene Kunststoffe verwendet werden, d. h. Kunststoffe, die bei Temperaturen einem Mahlprozess unterzogen wurden, bei denen das Kunststoffmaterial im versprödeten Zustand vorliegt. Vorteilhaft liegen die Temperaturen bei höchstens -10 °C, bevorzugt bei höchstens -30 °C und insbesondere bei höchstens -60 °C. "Höchstens" heißt in diesem Fall, dass die Temperaturen in der Regel in Bezug auf den absoluten Nullpunkt von 0 K geringer sein sollen als die angegebenen Werte. Durch das Kaltvermahlen wird sichergestellt, dass kein Reißen, sondern Brechen stattfindet. Die so erzeugten Kunststoffmehle weisen im Wesentlichen eine wenig zerklüftete, regelmäßige und nicht profilierte Oberfläche auf. Dadurch ist sichergestellt, dass sich in der Masse wesentlich weniger, insbesondere keine Lufteinschlüsse befinden.

Als Lösungsmittel wird bevorzugt zumindest teilweise Wasser eingesetzt. Dann erfolgt auch auf feuchtem Untergrund eine sehr gute Haftung der zur Herstellung der Nutzschicht verwendeten erfindungsgemäßen Masse.

Die Masse wurde dabei erfindungsgemäß so hergestellt, dass aus der Kunststoffmaterial-Bindemittel-Lösemittel-Mischung eine Dispersionsphase erzeugt wird, wobei
i1) das Mischen des kaltvermahlenen Kunststoffmaterials mit dem zumindest einen Bindemittel und dem zumindest einen Lösemittel unter Anwendung von Unterdruck erfolgt
   und/oder
i2) das Mischen als Einrühren oder dgl. mit so geringen Rührgeschwindigkeiten erfolgt, so dass kein Lufteintrag in die Bindemittel-Kunststoffmaterialmischung stattfindet,
   und/oder
i3) zumindest während des Mischens das Kunststoffmaterial mit einem dehydrophobierenden Additiv versehen wird
   und/oder
i4) wenigstens während des Mischens entschäumende Additive zugesetzt werden,
   so dass die Masse keine Lufteinschlüsse aufweist.

Erfindungsgemäß verwendete Kunststoffe können alle Elastomere und Plastomere sein, also alle natürlichen und künstlichen Kunststoffe, wie Hartkunststoffe, Kautschuke, Polyolefine und dgl. Insbesondere können auch recyclierte Kunststoffe vorteilhaft eingesetzt werden, wie beispielsweise recycliertes Gummimaterial. Wenn Hartkunststoffe verwendet werden, dann müssen die Bindemittel in der Nutzschicht, die aus der Masse hergestellt wurde, die gewünschte Elastizität einstellen.

Zur Erhöhung der Anpassungsfähigkeit der Masse an geforderte Eigenschaften der hergestellten Nutzschichten können auch Kunststoffmaterialgemische und/oder Bindemittelgemische eingesetzt werden, wodurch insbesondere die Elastizität der Nutzschichten gezielt eingestellt werden kann.

In einer besonders bevorzugten Ausgestaltung weist das gemahlene Kunststoffmaterial eine Partikelgröße von kleiner gleich 200 µm, bevorzugt kleiner gleich 100 µm, insbesondere kleiner gleich 50 µm aufweist. Durch die kleine Partikelgröße wird die Packungsdichte in der Masse erhöht und dadurch werden Lufteinschlüsse noch stärker vermieden. Außerdem werden zusätzlich auch sehr geringe Anstrichdicken ermöglicht, nämlich - wenn man davon ausgeht, dass die Dicke einer geschlossenen Schicht mindestens der dreifachen Partikeldicke entsprechen muss - von höchstens 600 µm.

Vorteilhaft kann vorgesehen werden, dass das Kunststoffmaterial eine definierte Qualität aufweist und/oder sortenrein ist, beispielsweise nur aus bestimmten LKW-Reifen gewonnen wurde. Dann lässt sich eine besonders homogene Masse herstellen, die besonders wasserundurchlässig ist.

In einer weiteren besonders vorteilhaften Ausgestaltung ist das zumindest eine verwendete Bindemittel für das Kunststoffmaterial ein Dispersionsbindemittel mit einer Glasübergangstemperatur von kleiner gleich -30 °C, bevorzugt kleiner gleich -40 °C, insbesondere kleiner gleich -50 °C. Dann kann die Elastizität der hergestellten Nutzschichten auch bei niedrigen Temperaturen gewährleistet werden. Bevorzugt liegt die Mindestfilmtemperatur der Masse bei 0 °C und je nach Mischungszusammensetzung der Masse auch darunter, wodurch für die Masse bis zu solch tiefen Temperaturen noch eine Filmbildung möglich ist. Mindestfilmtemperatur und Glasübergangstemperatur können insbesondere durch Bindemittelmischungen im Zusammenspiel mit dem Kunststoffmaterial gezielt gesteuert werden. Dabei kann vor allem bei Kunststoffmaterialien mit einer hohen Versprödungstemperatur deren fehlende Dehnbarkeit durch die Bindemittel kompensiert werden, so dass die hergestellte Nutzschicht bei einer bestimmten Temperatur noch eine gewünschte Elastizität aufweist.

Zweckmäßig ist das Dispersionsbindemittel eine Kunststoffdispersion, die bevorzugt Polyurethan und/oder und/oder ein Copolymerisat, insbesondere Acrylat oder Styrolacrylat aufweist. Allgemein ist anzumerken, dass natürlich vorteilhaft auch Bindemittelmischungen verwendet werden können, um bestimmte Eigenschaften gezielt einzustellen.

In einer besonders bevorzugten Ausgestaltung weist die Masse 10 bis 50 % Kunststoffmaterial, 50 bis 90 % Bindemittel, 0 bis 5 % Additive, bevorzugt 0 bis 1 % rheologische, 0 bis 1 % Benetzungs-, 0 bis 2 % Entschäumungs- und 0 bis 0,5 % Konservierungsadditive, und 0 bis 10 %, bevorzugt 3 bis 10 % Pigmente auf. Vorteilhaft kommen 30 bis 40 % Kunststoffmaterial, 55 - 75 % Bindemittel, insbesondere 33 % Kunststoffmaterial, 60 % Bindemittel, 0,2 % rheologische, 0,8 % Benetzungs-, 1 % Entschäumungs- und 0,3 % Konservierungsadditive und 4,7 % Pigmente zum Einsatz, wobei vorteilhaft als Bindemittel Styrolacrylat, als rheologisches Additiv Viscoatex (eine anionische Acrylcopolymerlösung), als Benetzungsadditiv BYK 192 (eine Lösung hochmolekularer Blockpolymere mit pigmentaffinen Gruppen), als Entschäumungsadditiv Agitan 105 (ein Gemisch flüssiger Kohlenwasserstoffe mit nichtionogenen Emulgatoren), als Konservierungsadditiv Parametol A26 (ein Natriumsalz eines Benzisothiazolons)und als Pigment Oxidschwarz (Eisenoxid) enthalten sind.

Grundsätzlich kann natürlich auf eine Farbgebung durch den Zusatz von Pigmenten verzichtet werden, jedoch wurde erstaunlicherweise festgestellt, dass sich die Verarbeitbarkeit der Masse bei Zusatz von Pigmenten verbessert, was möglicherweise daran liegt, dass diese Pigmente einen sehr kleinteiligen Aufbau aufweisen und damit eine zusätzliche große Oberfläche im Inneren des Massegemischs bereitstellen.

Selbständiger Schutz wird für das erfindungsgemäße Herstellungsverfahren beansprucht. Dieses Verfahren zur Herstellung einer Form-, Farb- und/oder Dichtungsmasse mit einem natürlichen oder künstlichen Kunststoffmaterial, insbesondere der erfindungsgemäßen Masse zeichnet sich dadurch aus, dass folgende Schritte ausgeführt werden:
a) das Kunststoffmaterial wird Kaltvermahlen bei Temperaturen, bei denen das Kunststoffmaterial versprödet ist, so dass das Kunststoffmaterial im Wesentlichen eine wenig zerklüftete, regelmäßige und nicht profilierte Oberfläche aufweist, wobei die Temperaturen vorteilhaft höchstens -10 °C, bevorzugt höchstens -30 °C, insbesondere höchstens -60 °C betragen,
b) das kaltvermahlene Kunststoffmaterial wird mit zumindest einem Bindemittel und zumindest einem Lösemittel gemischt, wobei das Bindemittel bevorzugt ein Dispersionsbindemittel mit einer Glasübergangstemperatur von kleiner gleich -30 °C, bevorzugt kleiner gleich -40 °C, insbesondere kleiner gleich -50 °C aufweist und insbesondere eine Kunststoffdispersion ist, welche bevorzugt Polyurethan und/oder Styrolacrylat aufweist, und
c) es wird aus der Kunststoffmaterial-Bindemittel-Lösemittel-Mischung eine Dispersionsphase erzeugt.

Dabei ist erfindungsgemäß vorgesehen, dass
k1) zumindest Schritt b) unter Anwendung von Unterdruck erfolgt
   und/oder
k2) in Schritt b) das Mischen als Einrühren oder dgl. mit so geringen Rührgeschwindigkeiten erfolgt, dass kein Lufteintrag in die Bindemittel-Kunststoffmaterialmischung stattfindet
   und/oder
k3) zumindest in Schritt b) das Kunststoffmaterial mit einem dehydrophobierenden Additiv versehen wird
   und/oder
k4) spätestens in Schritt b) entschäumende Additive zugesetzt werden,
   so dass die Masse keine Lufteinschlüsse aufweist.

In einer besonders vorteilhaften Ausgestaltung erfolgt also zumindest Schritt b) unter Anwendung von Unterdruck, insbesondere einem Druck kleiner gleich 0,5 bar. Dadurch werden Lufteinschlüsse noch stärker verhindert, da das Verflüssigen des Kunststoffmehls in Bindemittel und Lösemittel weitestgehend unter Luftausschluss erfolgt. Bevorzugt erfolgt auch Schritt c) unter Anwendung des Unterdrucks, wobei dann insbesondere während Schritt c) eine graduelle Anpassung des Drucks zu Normaldruck hin erfolgt.

Alternativ oder zusätzlich kann das Mischen als Einrühren oder dgl. mit so geringen Rührgeschwindigkeiten erfolgen, dass kein Lufteintrag in die Bindemittel-Kunststoffmaterialmischung stattfindet.

In einer weiteren vorteilhaften Ausgestaltung wird zumindest während Schritt b) das Kunststoffmaterial mit zumindest einem Additiv versehen, das das Kunststoff-material dehydrophobiert und/oder dessen Benetzung verbessert, wobei als De-hydrophobierungsmittel bevorzugt zumindest ein Silan und als Benetzungsmittel bevorzugt Tenside und/oder Kotenside eingesetzt werden. Auch dadurch wird sehr wirksam die Bildung von Lufteinschlüssen verhindert.

"Zumindest während" lässt dabei folgende Alternativen zu, wobei ggf. auch einzelne Alternativen gemeinsam oder auch alle gemeinsam verwendet werden können:
1. Während de Kaltvermahlens wird das Dehydrophobierungsmittel zugegeben.
2. Nach dem Kaltvermahlen wird das Dehydrophobierungsmittel zum Mehl hinzugegeben.
3. Während Schritt b) wird das Dehydrophobierungsmittel gesondert zugegeben.
4. Das Dehydrophobierungsmittel wird mit dem Bindemittel gemischt und während Schritt b) zugegeben.

Zu bevorzugen ist die Alternative 1. Allerdings müsste dann der Prozess des Kaltvermahlens von den Kunststoffaufbereitern zu den Masseherstellern übergeleitet werden.

Alternativ oder zusätzlich können spätestens in Schritt b) entschäumende Additive zugesetzt werden. Dadurch wird bewirkt, dass gegebenenfalls doch erfolgte Lufteinschlüsse wieder ausgetrieben werden.

Schließlich wird selbständiger Schutz auch für eine Nutzschicht beansprucht, die die erfindungsgemäße Masse und/oder eine Masse hergestellt nach dem erfindungsgemäßen Verfahren umfasst.

Die Kennzeichen und weitere Vorteile der vorliegenden Erfindung werden nun anhand der Beschreibung bevorzugter Ausführungsbeispiele im Zusammenhang mit der Zeichnung deutlich werden. Dabei zeigen:
- Fig. 1a: eine rasterelektronenmikroskopische Aufnahme eines warmvermahlenen EPDM-Mehls,
- Fig. 1b: eine rasterelektronenmikroskopische Aufnahme des erfindungsgemäß kaltvermahlenen EPDM-Mehls und
- Fig. 2a und Fig. 2b: rasterelektronenmikroskopische Schnittansichten durch die erfindungsgemäße Nutzschicht bei unterschiedlichen Aufnahmemaßstäben.

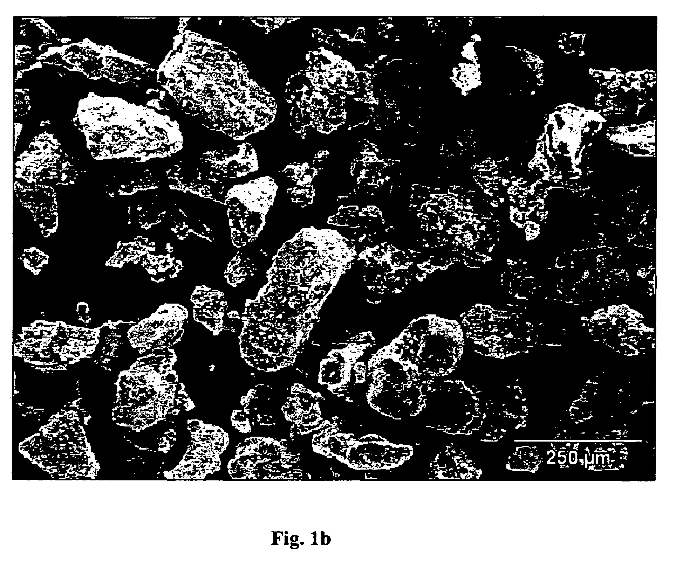

Gemäß einer bevorzugten Ausführungsform weist die erfindungsgemäße Masse als filmbildendes Bindemittel 55 bis 75 % Styrolacrylat auf, wobei vorzugsweise 60 % verwendet werden. Als Kunststoff werden 30 bis 40 % kaltvermahlenes EPDM (Ethylen-Propylen-Dien-Kautschuk) - Mehl entsprechend Fig. 1b eingesetzt, wobei bevorzugt 33 % eingesetzt werden. Als rheologisches Additiv, also als Additiv zur Verbesserung des Fließverhaltens, wird 0 bis 1 %, bevorzugt 0,2 %Viscoatex eingesetzt. Als die Benetzung verbesserndes Additivkommen 0,2 bis 1 %, bevorzugt 0,8 % BYK 192 zum Einsatz. Als Additiv zur Verbesserung der Entschäumung werden 0,5 bis 2 %, bevorzugt 1 % Agitan 105 eingesetzt und als Konservierungsmittel kommen 0,2 bis 0,5 %, bevorzugt 0,3 % Parmetol A26 zur Verwendung. Schließlich beinhaltet die Masse noch 3 bis 10 %, bevorzugt 4,7 % oxidschwarze Pigmente, um der Masse eine schwarze Farbe zu verleihen.

Zur Herstellung dieser Masse ist erfindungsgemäß vorgesehen, dass das EPDM in Mahlgängen bei Temperaturen von ca. -60 °C kalt vermahlen wird. Zur Kühlung wird dabei vorzugsweise flüssiger Stickstoff eingesetzt. Die Kaltvermahlung wird dabei solange durchgeführt, bis das Kunststoffmehl Partikelgrößen von ≤200 µm aufweist. Dadurch wird ein Kunststoffmehl erhalten, dessen Oberfläche wenig zerklüftet, regelmäßig, nicht profiliert und glatt ist. Weiterhin weist das Kunststoffmehl eine einheitliche Qualität auf und ist sortenrein.

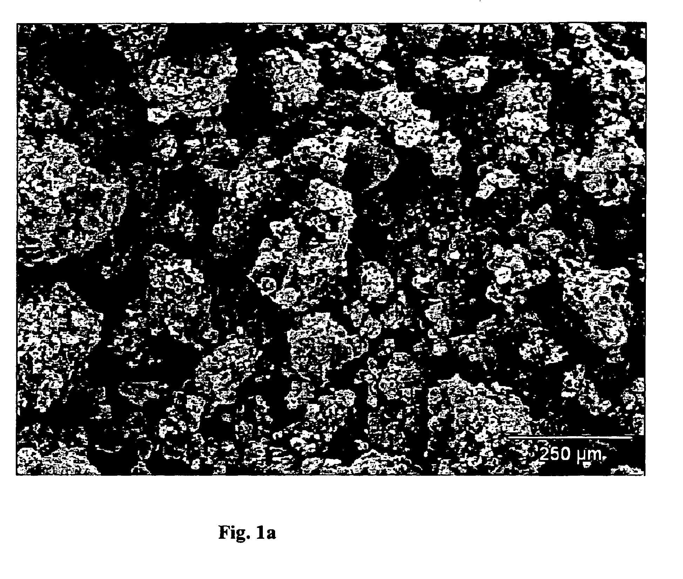

In Fig. 1a und Fig. 1b sind rasterelektronenmikroskopische Vergleichsaufnahmen im Aufnahmemaßstab 250 µm gezeigt, wobei Fig. 1a ein warmvermahlenes (Mahltemperatur ca. Raumtemperatur und oberhalb der Versprödungstemperatur) EPDM-Mehl und Fig. 1b ein kaltvermahlenes (Mahltemperatur ca. -60°C und unterhalb der Versprödungstemperatur) EPDM-Mehl zeigt. Zu erkennen ist, dass das beim Kaltvermahlen gewonnene Mehl eine wesentlich kompaktere Kornform mit bedeutend glatteren und ebenen Kornoberflächen aufweist, als das warmvermahlene Mehl.

Dieses Kunststoffmehl wird mit Viscoatex und BYK 192 zur Verbesserung des Reaktionsverhaltens beschichtet. Dadurch wird das an sich hydrophobe Kunststoffmehl hydrophiliert, denn Viscoatex wirkt dehydrophobierend und BYK 192 verbessert die Benetzung des Kunststoffmehls.

Anschließend wird dadurch eine Verflüssigungsphase hergestellt, dass dieses vorbehandelte Kunststoffmehl in ein Bindemittel-Lösemittel-Gemisch eingetragen wird. Als Bindemittel-Lösemittel-Gemisch kommt Styrolacrylat zum Einsatz, wobei es sich um eine Kunststoffdispersion handelt, die als Lösemittel Wasser enthält. Zusätzlich wird dem Gemisch noch Agitan 105 zugeführt, um gegebenenfalls in der Verflüssigungsphase doch eingeschlossene Luft auszuschäumen. Das Eintragen erfolgt in einer Rührvorrichtung, wobei nur mit geringen Rührgeschwindigkeiten gerührt wird, damit möglichst keine Luft in die Verflüssigungsphase eingetragen wird.

Um zusätzlich das Eintragen von Luft in die Verflüssigungsphase zu unterbinden, ist vorgesehen, dass die Rührvorrichtung einen Druck von weniger als 0,5 bar aufweist.

Die Hydrophilierung des Kunststoffmaterials wirkt nur vorübergehend und nur so lang, wie das Kunststoffmaterial in der wässrigen Bindemitteldispersion gelöst ist. Durch die Hydrophilierung wird eine vollständige Benetzung des Kunststoffmaterials in der Bindemitteldispersion erreicht, so dass nach der Trocknung der Masse keine Lufteinschlüsse entstehen.

Nachdem die Verflüssigungsphase hergestellt wurde, wird die Dispergierphase hergestellt. Dies kann in einer reinen Dispergiermaschine erfolgen. Alternativ kann auch ein Disolver insbesondere ein Hubdisolver verwendet werden. Ein solcher Hubdisolver weist eine Art horizontales Sägeblatt auf, das sich mit einer Schnittgeschwindigkeit von 30 m/s bewegt. Dadurch bilden sich in der Verflüssigungsphase Kavitationsräume, die wieder implodieren und eine innige Benetzung der Partikel untereinander bewirken.

Auch während des Herstellens der Dispergierphase ist vorteilhaft vorgesehen, dass dies unter einem Druck von 0,5 bar erfolgt, wobei entweder während oder erst am Ende des Prozesses des Herstellens der Dispergierphase eine sukzessive graduelle Anpassung des Drucks an den Umgebungsdruck stattfindet. Dadurch wird eine eventuelle Entmischung verhindert.

In dieser bevorzugten Ausführungsform des erfindungsgemäßen Verfahrens ist vorgesehen, dass das Herstellen der Verflüssigungsphase und der Dispergierphase in getrennten Gefäßen stattfindet. Alternativ kann allerdings auch vorgesehen sein, dass beide Prozesse in einem einzigen Gefäß stattfinden, das Rühreinrichtungen und Dispergierer umfasst.

Die erfindungsgemäße Masse ist hochgradig wasserundurchlässig, da das hydrophilierte Kunststoffmehl sich sehr gut in der Kunststoffdispersion verteilt und bei Herstellung der Dispersionsphase mit dem hydrophoben Kunststoff eine innige Bindung eingeht. Bei Anwendung der Masse zur Herstellung einer Nutzschicht trocknet diese unter Austritt von Wasser, wodurch die Oberfläche der Schicht sich kräuselt und verfilzt. Nachdem diese Filmbildung abgeschlossen ist, ist die Gesamtschicht hydrophob. Insbesondere wenn als Kunststoffmaterial elastische Kunststoffe, wie LKW-Reifen oder dergleichen eingesetzt werden, ist die Masse und damit auch die damit hergestellte Nutzschicht elastisch, so dass auch bei Einwirkung von Scherkräften und dgl. keine Rissbildung auftritt und die Nutzschicht somit dauerhaft wasserundurchlässig bleibt.

Allerdings kann die Elastizität auch dadurch hergestellt werden, dass unelastische Kunststoffe mit einem elastischen Binder verbunden werden.

In diesem Zusammenhang kann es günstig sein, wenn die Elastizitätsmodule der Kunststoffpartikel und des ausgehärteten Bindemittels unterschiedlich sind, so dass sich belastungsabhängig und mit steigender Belastung fallende spezifische Dehnungs- und Deformationswerte ergeben.

Weiterhin kann zusätzlich vorteilhaft vorgesehen sein, dass das Bindemittel eine Mischung aus verschiedenen Bindemitteln ist, die ihres Zeichens unterschiedliche Elastizitätsmodule aufweisen im ausgehärteten Zustand.

Hinsichtlich der Erzeugung und Verwendung von mit der erfindungsgemäßen Masse hergestellter Nutzschichten wird auf die DE 4 416 570 A1 verwiesen, deren Inhalt bezüglich des Offenbarungsgehalts für Nutzschichten vollumfänglich in die vorliegende Beschreibung mit aufgenommen wird.

Nach der Verwendung der Masse zur Herstellung von Nutzschichten trocknet diese unter Austritt des wässrigen Lösungsmittels. Das Lösungsmittel nimmt bei diesem Trocknungsprozess einen Großteil der Additive mit, wodurch auch das Kunststoffmaterial wieder hydrophob wird und dadurch die gesamte Nutzschicht wasserundurchlässig. Beim Aushärten erfolgt die Filmbildung durch Vernetzung und dieses Aushärten kann je nach verwendeter Masse bis zu 4 Wochen dauern.

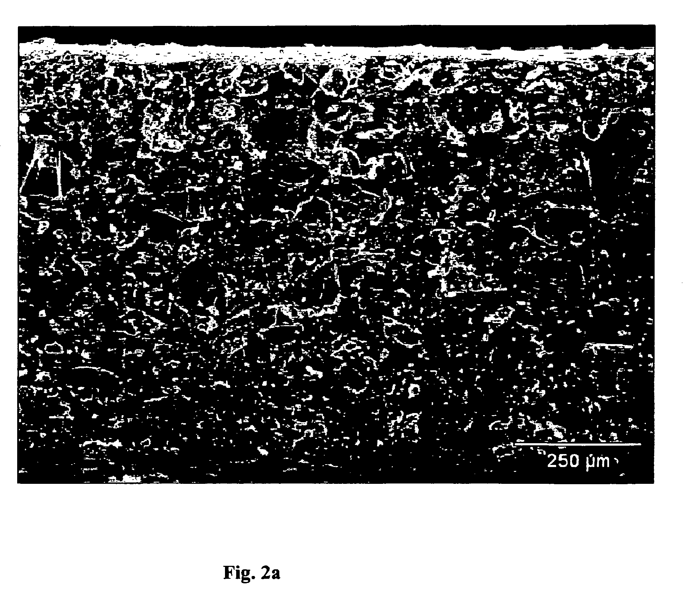

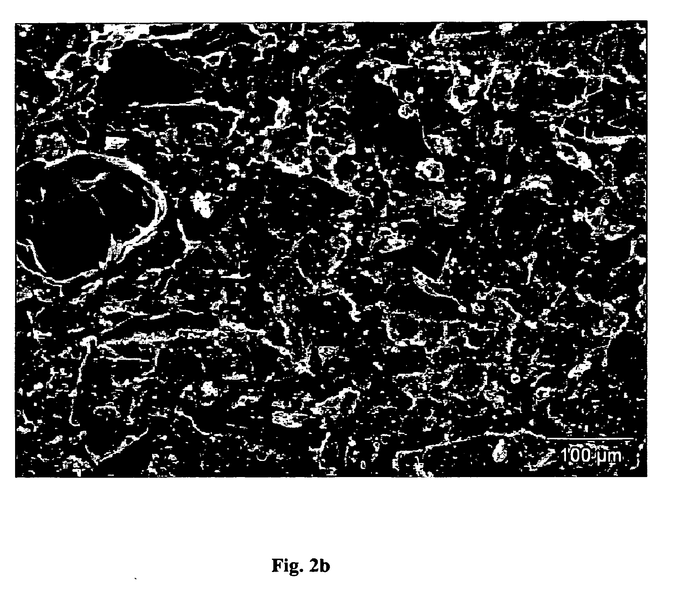

In Fig. 2 a und Fig. 2b sind rasterelektronenmikroskopische Schnittansichten in den Aufnahmemaßstäben 250 µm und 50 µm einer Nutzschicht gezeigt, die mit der erfindungsgemäßen Masse hergestellt wurde, wobei die Masse kaltvermahlenes Kunststoffmaterial entsprechend Fig. 1b enthält. Es ist zu erkennen, dass das die Nutzschicht nur sehr wenige, d.h. fast überhaupt keine Poren aufweist. Darüber hinaus ist das Kunststoffmaterial sehr gut im Bindemittel eingebettet.

Aus dem Vorstehenden ist deutlich geworden, dass mit der vorliegenden Erfindung Formen-, Farb- und/oder Dichtungsmassen bereitgestellt werden, die die Erzeugung von Nutzschichten, Schutzflächen, Verbundkörpern oder dgl. gestatten, die eine sehr hohe und sichere Wasserundurchlässigkeit aufweisen. Diese hohe Wasserundurchlässigkeit wird dadurch erreicht, dass Lufteinschlüsse in der erfindungsgemäßen Masse verhindert werden. Die DE 4 416 570 A1 hatte das Problem der Lufteinschlüsse nicht erkannt, sondern bediente sich ganz im Gegenteil solcher Lufteinschlüsse, um das spezifische Gewicht gezielt zu verringern.

Dabei weisen die mit der erfindungsgemäßen Masse hergestellten Nutzschichten eine sehr gute Haftung auf allen Untergründen auf. Unter trockenen Auftragungs-und Lagerungsbedingungen der Schicht betrug die Haftzugfestigkeit auch ohne Auftrag einer Grundierung 0,5 N/mm². Aber auch bei feuchten Untergründen wurde eine sehr gute Haftung erreicht. Die Nutzschicht ist also in der Lage negative Wasserdrücke aufzunehmen, wodurch es sich nicht nur als Außenabdichtung, sondern auch als Innenabdichtung eignet. Die Nutzschichten besitzen außerdem eine sehr hohe Dehnfähigkeit von annähernd 100 %, bevor es zu einer Rissbildung kam, wobei sie hohen Wasserdrücken von 19,5 bar widerstehen. Daher kann bei diesen Nutzschichten auf den Einsatz zusätzlicher Bewehrungseinlagen verzichtet werden.

## Patentansprüche

1. Form-, Farb- und/oder Dichtungsmasse zur Herstellung elastischer Nutzschichten mit zumindest einem natürlichen oder künstlichen Kunststoffmaterial, insbesondere Hartkunststoff, Kautschuk, Polyolefine oder recyclierte Hart- und Weichkunststoffe, insbesondere ein recycliertes Gummimaterial, das mit zumindest einem Bindemittel und zumindest einem Lösemittel, insbesondere Wasser, und bevorzugt weiteren Zusatzstoffen gemischt ist, wobei das Kunststoffmaterial kaltvermahlen ist bei Temperaturen, bei denen das Kunststoffmaterial versprödet ist, so dass das Kunststoffmaterial im Wesentlichen eine wenig zerklüftete, regelmäßige und nicht profilierte Oberfläche aufweist, wobei die Temperatur vorzugsweise höchstens -10 °C, bevorzugt höchstens -30 °C, insbesondere höchstens -60 °C beträgt, **dadurch gekennzeichnet, dass**
die Masse so hergestellt wurde, dass aus der Kunststoffmaterial-Bindemittel-Lösemittel-Mischung eine Dispersionsphase erzeugt wird, wobei
i1) das Mischen des kaltvermahlenen Kunststoffmaterials mit dem zumindest einen Bindemittel und dem zumindest einen Lösemittel unter Anwendung von Unterdruck erfolgt
und/oder
i2) das Mischen als Einrühren oder dgl. mit so geringen Rührgeschwindigkeiten erfolgt, so dass kein Lufteintrag in die Bindemittel-Kunststoffmaterialmischung stattfindet,
und/oder
i3) zumindest während des Mischens das Kunststoffmaterial mit einem dehydrophobierenden Additiv versehen wird
und/oder
i4) wenigstens während des Mischens entschäumende Additive zugesetzt werden,
so dass die Masse keine Lufteinschlüsse aufweist.

2. Masse nach Anspruch 1, **dadurch gekennzeichnet, dass** das Kunststoffmaterial eine Partikelgröße von kleiner gleich 200 µm, bevorzugt kleiner gleich 100 µm, insbesondere kleiner gleich 50 µm aufweist.

3. Masse nach Anspruch 1 oder 2, **dadurch gekennzeichnet, dass** das Kunststoffmaterial eine definierte Qualität aufweist und/oder sortenrein ist.

4. Masse nach einem der vorherigen Ansprüche, **dadurch gekennzeichnet, dass** das Bindemittel ein Dispersionsbindemittel mit einer Glasübergangstemperatur von kleiner gleich -30 °C, bevorzugt kleiner gleich -40 °C, insbesondere kleiner gleich - 50 °C aufweist.

5. Masse nach Anspruch 4, **dadurch gekennzeichnet, dass** das Dispersionsbindemittel eine Kunststoffdispersion ist, welche bevorzugt Polyurethan und/oder ein Copolymerisat, insbesondere Acrylat oder Styrolacrylat aufweist.

6. Masse nach einem der vorherigen Ansprüche, **dadurch gekennzeichnet, dass** diese 10 bis 50 %, bevorzugt 30 bis 40 % Kunststoffmaterial, 50 bis 90 % Bindemittel, 0 bis 5 % Additive, bevorzugt 0 bis 1 % rheologische, 0 bis 1 % Benetzungs-, 0 bis 2 % Entschäumungs- und 0 bis 0,5 % Konservierungsadditive, und 0 bis 10 %, bevorzugt 3 bis 10 % Pigmente, insbesondere 33 % Kunststoffmaterial, 60 % Bindemittel, 0,2 % rheologische, 0,8 % Benetzungs-, 1 % Entschäumungs-und 0,3 % Konservierungsadditive und 4,7 % Pigmente aufweisen, wobei vorteilhaft als Bindemittel Styrolacrylat, als rheologisches Additiv Viscoatex, als Benetzungsadditiv BYK 192, als Entschäumungsadditiv Agitan 105, als Konservierungsadditiv Parametol A26 und als Pigment Oxidschwarz enthalten sind.

7. Verfahren zur Herstellung einer Form-, Farb- und/oder Dichtungsmasse mit einem natürlichen oder künstlichen Kunststoffmaterial, insbesondere einer Masse nach einem der vorherigen Ansprüche, wobei folgende Schritte ausgeführt werden:
a) das Kunststoffmaterial wird Kaltvermahlen bei Temperaturen, bei denen das Kunststoffmaterial versprödet ist, so dass das Kunststoffmaterial im Wesentlichen eine wenig zerklüftete, regelmäßige und nicht profilierte Oberfläche aufweist, wobei die Temperaturen bevorzugt höchstens -10 °C, bevorzugt höchstens -30 °C, insbesondere höchstens -60 °C betragen,
b) das kaltvermahlene Kunststoffmaterial wird mit zumindest einem Bindemittel und zumindest einem Lösemittel, insbesondere Wasser, gemischt, wobei das Bindemittel bevorzugt ein Dispersionsbindemittel mit einer Glasübergangstemperatur von kleiner gleich -30 °C, bevorzugt kleiner gleich -40 °C, insbesondere kleiner gleich
-50 °C aufweist und insbesondere eine Kunststoffdispersion ist, welche bevorzugt Polyurethan und/oder Styrolacrylat aufweist, und
c) es wird aus der Kunststoffmaterial-Bindemittel-Lösemittel-Mischung eine Dispersionsphase erzeugt, **dadurch gekennzeichnet, dass**
k1) zumindest Schritt b) unter Anwendung von Unterdruck erfolgt
und/oder
k2) in Schritt b) das Mischen als Einrühren oder dgl. mit so geringen Rührgeschwindigkeiten erfolgt, dass kein Lufteintrag in die Bindemittel-Kunststoffmaterialmischung stattfindet
und/oder
k3) zumindest in Schritt b) das Kunststoffmaterial mit einem dehydrophobierenden Additiv versehen wird
und/oder
k4) spätestens in Schritt b) entschäumende Additive zugesetzt werden,
so dass die Masse keine Lufteinschlüsse aufweist.

8. Verfahren nach Anspruch 7, **dadurch gekennzeichnet, dass** Schritt b) unter Anwendung eines Drucks kleiner gleich 0,5 bar erfolgt, wobei bevorzugt auch Schritt c) unter Anwendung von Unterdruck erfolgt und dann insbesondere während Schritt c) eine graduelle Anpassung des Drucks zu Normaldruck hin erfolgt.

9. Verfahren nach Anspruch 7 oder 8, **dadurch gekennzeichnet, dass** zumindest während Schritt b) das Kunststoffmaterial mit zumindest einem Additiv versehen wird, das das Kunststoffmaterial dehydrophobiert und/oder dessen Benetzung verbessert, wobei als Dehydrophobierungsmittel bevorzugt zumindest ein Silan und als Benetzungsmittel bevorzugt Tenside und/oder Kotenside eingesetzt werden, und/oder dass spätestens in Schritt b) entschäumende Additive zugesetzt werden.

10. Verwendung der Masse nach einem der Ansprüche 1 bis 6 und/oder einer Masse hergestellt nach dem Verfahren nach einem der Ansprüche 7 bis 9 zur Herstellung von Nutzschichten, Schutzflächen oder Verbundkörpern.

## Claims

1. A molding, coloring and/or sealing compound for producing elastic useful layers, comprising:
at least one natural or artificial plastic material, in particular hard plastic, rubber, polyolefins, or recycled hard and soft plastic materials, in particular a recycled rubber material which is mixed with at least one binder and at least one solvent, in particular water and preferably additional additives, wherein the plastic material is milled cold at temperatures where the plastic material is brittle so that the plastic material essentially has a surface with little roughness that is even and not profiled, wherein the temperature is preferably -10°C at the most, preferably -30°C at the most, in particular -60°C at the most, **characterized in that**
the compound is produced so that a dispersion phase is generated from the plastic material - binder - solvent mix, wherein
i1) mixing the cold milled plastic material with the at least one binder and at least one solvent is performed under vacuum and/or
i2) mixing through stirring and similar is performed with stirring speeds that are low enough so that no air is introduced into the binder plastic material mix, and/or
i3) the plastic material is provide with an additive during mixing which additive reduces hydrophobic properties and/or
i4) foam retardant additives are added at least during mixing,
so that the compound does not include air inclusions.

2. The compound according to claim 1, **characterized in that** the plastic material has a particle size of less than or equal to 200 µm, preferably less than or equal to 100 µm, in particular less than or equal to 50 µm.

3. The compound according to claim 1 or 2, **characterized in that** the plastic material has a defined quality and/or is purely of one type.

4. The compound according to one of the preceding claims, **characterized in that** the binder includes a dispersion binder with a glass transition temperature of less than or equal to -30°C, preferably less of equal -40°C, in particular less than or equal to -50°C.

5. The compound according to claim 4, **characterized in that** the dispersion binder is a plastic dispersion which includes preferably polyurethane and/or a copolymerisate, in particular acrylate or styrolacrylate.

6. The compound according to one of the preceding claims, **characterized in that** the compounds comprise 10 to 50%, preferably 30 to 40% plastic material, 50 to 90% binder, 0 to 5% additives, preferably 0 to 1% rheological additives, 0 to 1% wetting additives, 0 to 2% foam retardant additives and 0 to 0.5% conservation additives and 0 to 10%, preferably 3 to 10% pigments, in particular 33% plastic material, 60% binder, 0.2% rheological additives, 0.8% wetting additives, 1% foam retardant additives and 0.3% conservation additives and 4.7% pigments, wherein styrolacrylate is advantageously used for a binder, Viscotex is used as a rheological additive, BYK192 is used as a wetting additive, Agitan 105 is used as a foam retardant additive, Parametol A26 is used as a conservation additive and oxide black is included as a pigment.

7. A method for producing a forming, coloring and/or sealing compound including a natural or artificial plastic material, in particular a compound according to one of the preceding claims, comprising the following steps:
a) cold milling the plastic material at temperatures where the plastic material is brittle, so that the plastic material essentially has a surface with little roughness that is even and not profiled, wherein temperatures are preferably -10°C at the most, preferably -30°C at the most, in particular -60°C at the most,
b) mixing the cold milled plastic material with at least one binder and at least one solvent, in particular water, wherein the binder is preferably a dispersion binder with a glass transition temperature of less than or equal to -30° C, preferably less than or equal to -40°C, in particular less than or equal to -50°C and in particular is a plastic dispersion which preferably includes polyurethane or styrolacrylate.
c) producing a dispersion phase from the plastic material - binder - solvent mix,
**characterized in that**
k1) at least step b) is performed using vacuum and/or
k2) step b) includes mixing or stirring or similar with slow stirring speeds so that no air is introduced into the binder plastic material mix, and/or
k3) at least in step b) the plastic material is provided with a dehydrophobing additive and/or
k4) foam retardant additives are added in step b) at the latest, so that the compound does not include air inclusions.

8. The method according to claim 7, **characterized in that** step b) is performed using a pressure of less than or equal to 0.5 bar, wherein preferably also step c) is performed using vacuum and then in particular during step c) a gradual adaptation of the pressure is performed towards a normal pressure.

9. The method according to claim 7 or 8, **characterized in that** at least during step b) the plastic material is provided with at least one additive which dehydrophobes the plastic material and/or improves its wetting, wherein at least one silane is preferably used as dehydrophobing compound and tensides and/or cotensides are preferably used as wetting compounds and/or that foam retardant additives are added in step b) at the latest.

10. Using the compound according to one of the claims 1 to 6, and/or the compound produced according to the method according to one of the claims 7 to 9 for producing useful layers, protective surfaces or composite elements.

## Revendications

1. Matière d'étanchéité, matière à colorer et/ou matière à mouler pour la fabrication de couches d'usure élastiques avec au moins un matériau de matière plastique naturel ou artificiel, en particulier de la matière plastique dure, du caoutchouc, des polyoléfines ou des matières plastiques dures et tendres recyclées, en particulier un matériau de caoutchouc recyclé, qui est mélangé avec au moins un liant et au moins un solvant, en particulier de l'eau, et de préférence avec d'autres adjuvants, le matériau de matière plastique étant broyé à froid à des températures auxquelles le matériau de matière plastique est fragilisé, de telle sorte que le matériau de matière plastique présente essentiellement une surface un peu crevassée, régulière et non profilée, la température étant de préférence de -10 °C au maximum, de préférence de -30 °C au maximum, en particulier de - 60 °C au maximum, **caractérisée en ce que**
la matière a été fabriquée de telle sorte qu'une phase de dispersion est produite à partir du mélange matériau de matière plastique-liant-solvant,
i1) le mixage du matériau de matière plastique broyé à froid avec le liant au moins au nombre de un et le solvant au moins au nombre de un s'effectuant en utilisant une dépression
et/ou
i2) le mixage s'effectuant en tant que délayage ou similaire avec des vitesses de délayage tellement faibles qu'aucune inclusion d'air ne survient dans le mélange liant-matériau de matière plastique,
et/ou
i3) le matériau de matière plastique étant muni d'un additif déshydrophobisant au moins pendant le mixage
et/ou
i4) des additifs démoussants étant ajoutés au moins pendant le mixage,
de telle sorte que la matière ne présente pas d'inclusions d'air.

2. Matière selon la revendication 1, **caractérisée en ce que** le matériau de matière plastique présente une dimension de particules inférieure ou égale à 200 µm, inférieure ou égale à 100 µm, en particulier inférieure ou égale à 50 µm.

3. Matière selon la revendication 1 ou 2, **caractérisée en ce que** le matériau de matière plastique présente une qualité définie et/ou est pur.

4. Matière selon une des revendications précédentes, **caractérisée en ce que** le liant présente un liant de dispersion ayant une température de transition vitreuse inférieure ou égale à -30 °C, de préférence inférieure ou égale à -40 °C, en particulier inférieure ou égale à - 50 °C.

5. Matière selon la revendication 4, **caractérisée en ce que** le liant de dispersion est une dispersion de matière plastique qui présente de préférence du polyuréthane et/ou un copolymérisat, en particulier de l'acrylate ou du styrolacrylate.

6. Matière selon une des revendications précédentes, **caractérisée en ce que** celle-ci présente 10 à 50 %, de préférence 30 à 40 % de matériau de matière plastique, 50 à 90 % de liant, 0 à 5 % d'additifs, de préférence 0 à 1% d'additifs rhéologiques, 0 à 1 % d'additifs de mouillage, 0 à 2% d'additifs démoussants et 0 à 0,5 % d'additifs de conservation, et 0 à 10 %, de préférence 3 à 10 %, de pigments, en particulier 33 % de matériau de matière plastique, 60 % de liant, 0,2 % d'additifs rhéologiques, 0,8 % d'additifs de mouillage, 1 % d'additifs démoussants et 0,3 % d'additifs de conservation et 4,7 % de pigments, en utilisant de préférence du styrolacrylate comme liant, du Viscoatex comme additif rhéologique, BYK 192 comme additif de mouillage, Agitan 105 comme additif démoussant, Parametol A26 comme additif de conservation et de l'oxyde noir comme pigment.

7. Procédé de fabrication d'une matière d'étanchéité, matière à colorer et/ou matière à mouler avec un matériau de matière plastique naturel ou artificiel, en particulier d'une matière selon une des revendications précédentes, les étapes suivantes étant exécutées :
a) le matériau de matière plastique est broyé à froid à des températures auxquelles le matériau de matière plastique est fragilisé, de telle sorte que le matériau de matière plastique présente essentiellement une surface un peu crevassée, régulière et non profilée, les températures étant de préférence de -10 °C au maximum, de préférence de -30 °C au maximum, en particulier de -60 °C au maximum,
b) le matériau de matière plastique broyé à froid est mélangé avec au moins un liant et au moins un solvant, en particulier de l'eau, le liant présentant un liant de dispersion ayant une température de transition vitreuse inférieure ou égale à -30 °C, de préférence inférieure ou égale à -40 °C, en particulier inférieure ou égale à -50 °C et est en particulier une dispersion de matière plastique qui présente de préférence du polyuréthane et/ou du stryolacrylate, et
c) une phase de dispersion est produite à partir du mélange matériau de matière plastique-liant-solvant, **caractérisé en ce que**
k1) au moins l'étape b) s'effectue en utilisant une dépression et/ou **en ce que**
k2) dans l'étape b), le mixage s'effectue en tant que délayage ou similaire avec des températures de délayage tellement faibles qu'aucune inclusion d'air ne survient dans le mélange liant-matériau de matière plastique
et/ou **en ce que**
k3) au moins dans l'étape b) le matériau de matière plastique est muni d'un additif déshydrophobisant
et/ou **en ce que**
k4) des additifs démoussants sont ajoutés au moins pendant le mixage, au plus tard dans l'étape b),
de telle sorte que la matière ne présente pas d'inclusions d'air.

8. Procédé selon la revendication 7, **caractérisé en ce que** l'étape b) s'effectue en utilisant une pression inférieure ou égale à 0,5 bar, l'étape c) s'effectuant de préférence également en utilisant une dépression et puis une adaptation graduelle de la pression en direction de la pression normale s'effectuant en particulier pendant l'étape c).

9. Procédé selon la revendication 7 ou 8, **caractérisé en ce que**, au moins pendant l'étape b), le matériau de matière plastique est muni d'au moins un additif qui déshydrophobise le matériau de matière plastique et/ou améliore son mouillage, de préférence au moins un silane étant utilisé comme agent déshydrophobisant, et de préférence des tensio-actifs et/ou des cotensio-actifs étant utilisés comme agent de mouillage, et/ou **en ce que** des additifs démoussants sont ajoutés au plus tard dans l'étape b).

10. Utilisation de la matière selon une des revendications 1 à 6 et/ou d'une matière fabriquée selon le procédé selon une des revendications 7 à 9 pour la fabrication de couches d'usure, de surfaces de protection ou des corps composites.
